# FASCICULE DE BREVET EUROPEEN

(11) **EP 3 868 157 B1**
(45) Date de publication et mention de la délivrance du brevet: **10.08.2022**
(21) Numéro de dépôt: 19828813.6
(22) Date de dépôt: 08.10.2019
(51) Int. Cl.: H04W 56/00, H04W 84/20

(54) **PROCÉDÉ D'ACTIVATION D'UNE FONCTION "STATION DE BASE" DANS UN NOEUD IAB**
VERFAHREN ZUR AKTIVIERUNG EINER »BASISSTATIONSFUNKTION IN EINEM IAB-KNOTEN
METHOD FOR ACTIVATING A "BASE STATION" FUNCTION IN AN IAB NODE

(30) Priorité: 17.10.2018 FR 1859589
(43) Date de publication de la demande: 25.08.2021
(73) Titulaire: Orange, 92130 Issy-les-Moulineaux (FR)
(72) Inventeur: LIN, Hao, 92326 CHÂTILLON CEDEX (FR)
(74) Mandataire: Vidon Brevets & Stratégie
(86) Numéro de dépôt international: PCT/FR2019/052383
(87) Numéro de publication internationale: WO 2020/079349

(56) Documents cités:
- US-A1- 2011 268 055
- US-B1- 6 628 642

## Description

### 1. Domaine de l'invention

Le domaine de l'invention est celui du déploiement des réseaux cellulaires dans le contexte de la 5G ou 5^{ème} génération de normes pour la téléphonie mobile. Plus précisément, l'invention concerne les architectures de réseaux cellulaires dites IAB pour *Integrated Access and Backhaul* (ou en français accès et collecte intégrés).

### 2. Art antérieur et ses inconvénients

Afin de satisfaire une demande croissante en haut débit, les techniques de communication utilisées dans le cadre de la 5G reposent sur l'utilisation de larges bandes de fréquences dans le spectre de fréquences compris entre 30 et 300 GHz. L'utilisation de ces hautes fréquences a un impact sur la portée de l'émission radio des stations de bases qui s'en trouve réduite. Il en résulte une densification de la répartition des stations de bases afin de compenser cette réduction de portée des émissions radio.

Pour répondre à ce besoin de densification de la répartition des stations de bases, différentes architectures de réseaux cellulaires sont proposées. Parmi ces architectures de réseaux cellulaires se trouve l'architecture IAB.

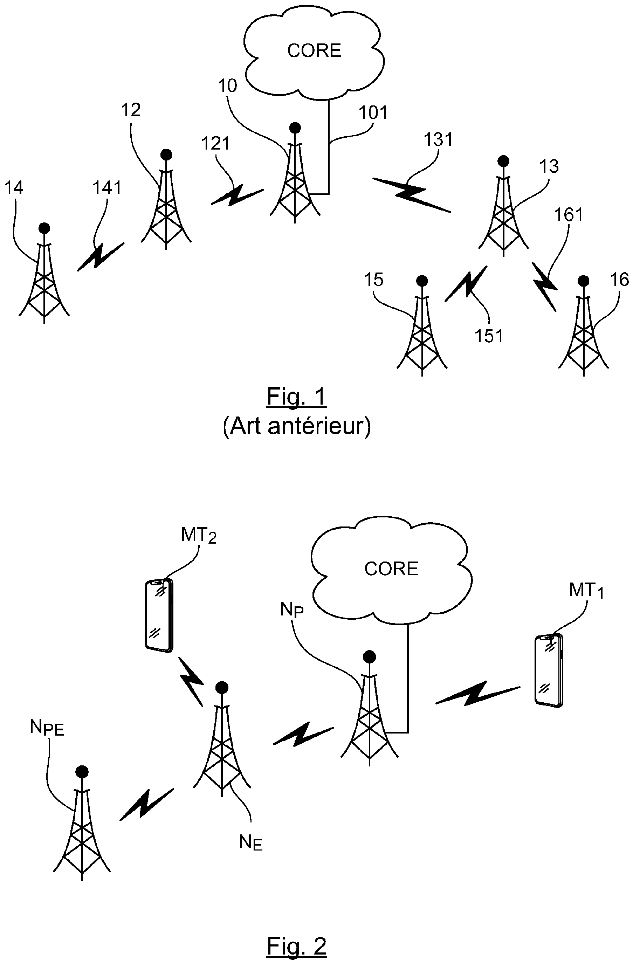

La **figure 1** représente une telle architecture IAB. Une telle architecture comprend un premier noeud IAB 10, appelé noeud donneur. Le noeud donneur 10 est connecté au réseau coeur CORE au moyen d'une liaison de type filaire 101. Dans l'exemple représenté à la figure 1, le noeud donneur 10 est connecté à deux autres noeuds IAB le noeud 12 et le noeud 13 au moyen des liaisons radio 121 et respectivement 131.

Le noeud 12 est connecté à un autre noeud IAB, le noeud 14 au moyen d'une liaison radio 141. Le noeud 13 est connecté à un autre noeud IAB, le noeud 15 au moyen d'une liaison radio 151. Enfin, le noeud 15 est connecté à un autre noeud IAB, le noeud 16 au moyen d'une liaison radio 161.

Ainsi, le noeud 10 agit en tant que parent pour les noeuds 12 et 13 qui, eux-mêmes agissent en tant que parent respectivement pour les noeuds 14 et 15. Enfin, le noeud 15 agit en tant que parent pour le noeud 16.

Un noeud IAB embarque deux fonctions, une fonction dite « station de base » et une fonction dite «terminal mobile ». Lorsqu'un noeud IAB, tel que le noeud 12, par exemple, communique avec son noeud parent, ici le noeud 10, la fonction « terminal mobile » est activée et le noeud 12 se comporte comme un terminal mobile vis-à-vis du noeud 10. Lorsque le noeud 12 communique avec son noeud enfant, ici le noeud 14, la fonction « station de base » est activée et le noeud 12 se comporte comme une station de base à l'égard du noeud 14.

Ainsi, en fonction de la nature du lien qui l'unit au noeud IAB avec lequel il communique, un noeud IAB exerce une fonction de station de base ou une fonction de terminal mobile.

Lorsque la fonction « station de base » est activée dans un noeud IAB, celui-ci contrôle les canaux de transmission descendant, c'est-à-dire les canaux utilisés pour transmettre des données depuis le noeud IAB parent vers le noeud enfant, et les canaux de transmission remontant, c'est-à-dire les canaux utilisés pour transmettre des données depuis le noeud IAB enfant vers le noeud parent, de ses noeuds IAB enfants. Un noeud enfant réceptionne des signaux de planification transmis par son noeud parent lesquels transportent notamment des informations relatives à des horaires d'émission et/ou des horaires de réception de données à destination ou en provenance du noeud enfant, ainsi que la durée de ces transmissions.

Lorsqu'un nouveau noeud IAB se connecte pour la première fois à son noeud parent, la fonction « terminal mobile » est activée. Conformément à une procédure d'établissement d'une connexion dite procédure RACH *(Random Access Channel* ou accès aléatoire à un canal) le noeud enfant transmet un premier message au noeud parent appelé « préambule ». En réponse à ce premier message, le noeud parent émet un message comprenant une valeur d'un décalage temporel. D'autres messages sont ensuite échangés entre le noeud parent et le noeud enfant afin d'établir une connexion entre eux.

Lorsqu'un noeud parent émet un signal à destination d'un noeud enfant, ce dernier reçoit le signal émis avec un délai dû au temps de propagation du signal dans l'air et fonction de la distance séparant le noeud parent du noeud enfant. A cause de ce délai, les signaux émis par le noeud enfant à destination du noeud parent ne sont pas reçus par ce dernier à l'horaire indiqué dans les signaux de planification ce qui perturbe la gestion des communications par le noeud parent.

Le noeud enfant utilise la valeur du décalage temporel reçue au cours de la procédure RACH pour corriger ce délai.

Afin de limiter les interférences entre stations de bases lorsqu'elles fonctionnent en mode duplex par séparation temporelle (en anglais, *time-division duplex* ou TDD), tous les nœuds IAB doivent être synchronisés entre eux. Afin d'assurer cette synchronisation, chaque nœud IAB peut utiliser la valeur du décalage temporel transmise par son nœud parent.

Cependant, une architecture IAB étant une architecture arborescente, des erreurs de mesures d'une valeur du décalage temporel estimée pour un noeud IAB donné se répercutent sur les mesures des valeurs du décalage temporel estimées pour son noeud enfant et ainsi de suite. Il en résulte que les noeuds IAB ne sont pas synchronisés entre eux de manière suffisamment précise, ce qui impacte de manière négative l'exécution de la fonction « station de base » par les noeuds IAB.

Il existe donc un besoin d'une technique permettant de synchroniser de manière précise les différents noeuds IAB d'un même réseau entre eux afin de limiter les interférences entre eux lorsque la fonction « station de base » est activée. Des exemples d'art antérieur sont divulgués par US 2011/268055 et US 6 628 642.

### 3. Exposé de l'invention

L'invention répond à ce besoin en proposant un procédé d'activation d'au moins une fonction dans un premier équipement de communication appartenant à un réseau de communication, le procédé comprenant les étapes suivantes exécutées par un deuxième équipement de communication appartenant également au réseau de communication :
- détermination, en fonction d'au moins un temps de propagation d'au moins un premier message émis par le premier équipement de communication à destination du deuxième équipement de communication, d'au moins une première valeur d'un décalage temporel destinée à être utilisée pour synchroniser le premier et le deuxième équipement de communication,
- vérification de la conformité de ladite première valeur du décalage temporel avec un critère de précision,
- lorsque ladite première valeur du décalage temporel est conforme avec le critère de précision, émission à destination du premier équipement de communication d'une commande d'activation de ladite fonction.

Ainsi la solution objet de l'invention consiste à ne pas activer la fonction « station de base » d'un noeud IAB enfant tant qu'une valeur du décalage temporel, déterminée par son noeud parent, ne remplit pas un critère de synchronisation. En d'autres mots, tant qu'une valeur du décalage temporel ne remplit pas une condition de précision donnée, et que par conséquent le noeud enfant utilisant cette valeur du décalage horaire n'est pas synchronisé de manière suffisamment précise avec son noeud parent, alors le noeud enfant n'est pas autorisé à activer la fonction « station de base ». L'autorisation d'activer cette fonction lui est donnée par son noeud parent qui est le garant d'une synchronisation précise avec ses noeuds enfants.

En s'assurant qu'un noeud enfant est synchronisé de façon précise avec son noeud parent avant de pouvoir activer la fonction « station de base » et ainsi pouvoir devenir lui-même un noeud parent, la propagation des erreurs de mesures de la valeur du décalage temporel du noeud enfant à ses propres noeuds enfants est réduite.

Par conséquent la solution objet de l'invention permet de synchroniser de manière précise tous les noeuds IAB d'un même réseau.

Dans un mode de réalisation du procédé d'activation objet de l'invention, la fonction ayant été activée dans le premier équipement, le procédé d'activation comprend les étapes suivantes :
- détermination, en fonction d'au moins un temps de propagation d'au moins un deuxième message émis par le premier équipement de communication à destination du deuxième équipement de communication, d'au moins une deuxième valeur du décalage temporel,
- lorsque ladite au moins une deuxième valeur du décalage temporel n'est pas conforme avec le critère de précision, émission à destination du premier équipement de communication d'une commande de désactivation de ladite fonction.

Lorsque la fonction « station de base » est activée dans un noeud enfant, le noeud parent continue de mesurer une valeur du décalage temporel au moyen de messages émis par le noeud enfant. Si le noeud parent détermine que le noeud enfant n'est plus synchronisé de manière suffisamment précise avec le noeud parent, le noeud parent transmet une commande de désactivation de la fonction « station de base » au noeud enfant. Le noeud enfant ne peut donc plus agir en tant que station de base vis-à-vis de ses propres noeuds enfants.

Dans un mode de réalisation du procédé d'activation objet de l'invention, lorsqu'une valeur du décalage temporel n'est pas conforme avec le critère de précision, le procédé d'activation comprend une étape de détermination, en fonction d'au moins un temps de propagation d'au moins un troisième message émis par le premier équipement de communication à destination du deuxième équipement de communication, d'au moins une troisième valeur du décalage temporel, ladite étape de détermination étant exécutée jusqu'à ce que ladite au moins une troisième valeur du décalage temporel soit conforme avec le critère de précision.

Lorsque la fonction « station de base » est désactivée dans un noeud enfant, le noeud parent continue de mesurer une valeur du décalage temporel au moyen de messages émis par le noeud enfant qui continue de se comporter comme un terminal mobile vis-à-vis de son noeud parent. Si le noeud parent détermine que le noeud enfant est de nouveau synchronisé de manière suffisamment précise avec le noeud parent, le noeud parent transmet une commande d'activation de la fonction « station de base » au noeud enfant. Le noeud enfant peut donc de nouveau agir en tant que station de base vis-à-vis de ses propres noeuds enfants.

Dans un mode de réalisation du procédé d'activation objet de l'invention, une valeur du décalage temporel est conforme au critère de précision lorsque une différence entre ladite valeur du décalage temporel et une valeur du décalage temporel précédente est inférieure à un premier seuil.

Dans un mode de réalisation du procédé d'activation objet de l'invention, une valeur du décalage temporel est conforme au critère de précision lorsque au moins deux valeurs du décalage temporel consécutives sont déterminées avec une marge d'erreur inférieure à un deuxième seuil.

L'invention a également pour objet un procédé de communication entre un premier équipement et un deuxième équipement appartenant tous les deux à un réseau de communication, le procédé de communication étant exécuté par le premier équipement et comprenant les étapes suivantes :
- émission d'au moins un premier message à destination du deuxième équipement de communication,
- réception d'au moins une première valeur d'un décalage temporel destinée à être utilisée pour synchroniser le premier et le deuxième équipement de communication, ladite au moins une première valeur du décalage temporel étant déterminée en fonction d'au moins un temps de propagation dudit au moins un premier message,
- réception d'une commande d'activation d'une fonction dans le premier équipement de communication émise par le deuxième équipement de communication lorsque ladite première valeur du décalage temporel est conforme avec un critère de précision.

Dans un mode de réalisation du procédé de communication objet de l'invention, la fonction ayant été activée dans le premier équipement, le procédé de communication comprend les étapes suivantes :
- émission d'au moins un deuxième message à destination du deuxième équipement de communication
- réception d'au moins une deuxième valeur du décalage temporel, ladite au moins une deuxième valeur du décalage temporel étant déterminée en fonction d'au moins un temps de propagation dudit au moins un deuxième message,
- lorsque ladite au moins une deuxième valeur du décalage temporel n'est pas conforme avec le critère de précision, réception d'une commande de désactivation de ladite fonction.

Dans un mode de réalisation du procédé de communication objet de l'invention, lorsque une valeur du décalage temporel n'est pas conforme avec le critère de précision, le procédé de communication comprend une étape de réception d'au moins une troisième valeur du décalage temporel déterminée en fonction d'au moins un temps de propagation d'au moins un troisième message émis à destination du deuxième équipement de communication, ladite étape de réception étant exécutée jusqu'à ce que ladite au moins une troisième valeur du décalage temporel soit conforme avec le critère de précision.

Dans un mode de réalisation du procédé de communication objet de l'invention, le premier message comprend une demande d'attachement du premier équipement.

Dans un mode de réalisation du procédé de communication objet de l'invention, les messages émis par le premier équipement de communication sont des messages de signalisation.

Dans un mode de réalisation du procédé de communication objet de l'invention, un horaire d'émission du au moins un deuxième message est ajusté en fonction de la première valeur du décalage temporel.

L'invention concerne encore un équipement de communication, appartenant à un réseau de communication, capable d'activer d'au moins une fonction dans un autre équipement de communication appartenant audit réseau de communication, l'équipement de communication comprenant des moyens pour :
- déterminer, en fonction d'au moins un temps de propagation d'au moins un premier message émis par l'autre équipement de communication, d'au moins une première valeur d'un décalage temporel destinée à être utilisée pour synchroniser l'autre équipement de communication avec ledit équipement de communication,
- vérifier la conformité de ladite première valeur du décalage temporel avec un critère de précision,
- lorsque ladite première valeur du décalage temporel est conforme avec le critère de précision, émettre à destination de l'autre équipement de communication une commande d'activation de ladite fonction.

L'invention a encore pour objet un équipement de communication, appartenant à un réseau de communication, apte à communiquer avec un autre équipement de communication appartenant également au réseau de communication, l'équipement de communication comprenant des moyens pour :
- émettre au moins un premier message à destination de l'autre équipement de communication,
- recevoir au moins une première valeur d'un décalage temporel destinée à être utilisée pour synchroniser l'équipement de communication avec l'autre équipement de communication, ladite au moins une première valeur du décalage temporel étant déterminée en fonction d'au moins un temps de propagation dudit au moins un premier message,
- recevoir une commande d'activation d'une fonction émise par l'autre équipement de communication lorsque ladite première valeur du décalage temporel est conforme avec un critère de précision.

L'invention concerne enfin des produits programme d'ordinateur comprenant des instructions de code de programme pour la mise en oeuvre des procédés tels que décrits précédemment, lorsqu'ils sont exécutés par un processeur.

L'invention vise également un support d'enregistrement lisible par un ordinateur sur lequel sont enregistrés des programmes d'ordinateur comprenant des instructions de code de programme pour l'exécution des étapes des procédés selon l'invention tels que décrits ci-dessus.

Un tel support d'enregistrement peut être n'importe quelle entité ou dispositif capable de stocker les programmes. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, un tel support d'enregistrement peut être un support transmissible tel qu'un signal électrique ou optique, qui peut être acheminé via un câble électrique ou optique, par radio ou par d'autres moyens, de sorte que les programmes d'ordinateur qu'il contient sont exécutables à distance. Les programmes selon l'invention peuvent être en particulier téléchargés sur un réseau par exemple le réseau Internet.

Alternativement, le support d'enregistrement peut être un circuit intégré dans lequel les programmes sont incorporés, le circuit étant adapté pour exécuter ou pour être utilisé dans l'exécution des procédés objets de l'invention précités.

### 4. Liste des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
La **figure 1** représente une architecture IAB selon l'art antérieur,
la **figure 2** représente une architecture IAB simplifiée dans laquelle l'invention est implémentée selon ses différents modes de réalisation,
la **figure 3** représente les différentes étapes mises en oeuvre lors de l'exécution des procédés d'activation d'une fonction et de communication selon un mode de réalisation de l'invention,
la **figure 4** représente un noeud IAB selon un mode de réalisation de l'invention.

### 5. Description détaillée de modes de réalisation de l'invention

La **figure 2** représente une architecture IAB simplifiée dans laquelle l'invention est implémentée selon ses différents modes de réalisation.

Dans cette architecture simplifiée, un premier noeud IAB dit noeud parent N_{P} est connecté au moyen d'une connexion filaire au réseau coeur CORE. Le noeud parent N_{P} est connecté à un noeud IAB enfant N_{E} et le noeud enfant est connecté à un noeud IAB petit-enfant N_{PF}. Le noeud enfant N_{E} est un noeud parent pour le noeud petit-enfant N_{PE}. Un premier terminal mobile MT₁ est attaché au noeud parent N_{P} qui agit en tant que station de base pour le terminal mobile MT₁. Un deuxième terminal mobile MT₂ est attaché au noeud parent N_{E} qui agit en tant que station de base pour le terminal mobile MT₂.

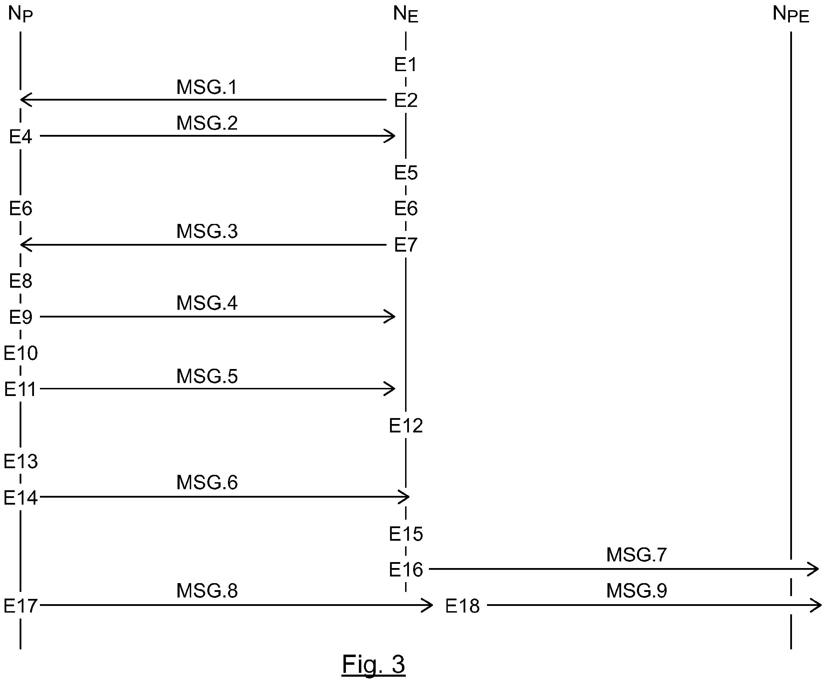

La **figure 3** représente les différentes étapes mises en oeuvre lors de l'exécution des procédés d'activation d'une fonction et de communication selon un mode de réalisation de l'invention.

Au cours d'une étape E1, le noeud enfant N_{E} active la fonction « terminal mobile » et écoute, dans des bandes de fréquences spécifiques du spectre, des signaux de synchronisation émis par le noeud parent N_{P}. Les signaux de synchronisation émis par le noeud parent N_{P} comprennent des informations sur le découpage temporel du canal de transmission radio en créneaux temporels utilisé par le noeud parent pour communiquer avec ses noeuds enfants ou des terminaux mobiles, tel que le terminal mobile MT₁, qui sont attachés au noeud parent N_{P}. Ainsi, le noeud enfant N_{E} est informé des horaires des créneaux temporels utilisés pour communiquer avec le noeud parent N_{P}. Le noeud enfant N_{E} obtient également des informations sur la destination des créneaux temporels. Ainsi un premier ensemble de créneaux temporels est dédié à la transmission de données en voie descendante, c'est-à-dire depuis le noeud parent N_{P} vers le noeud enfant N_{E} ou le terminal mobile MT₁. Un deuxième ensemble de créneaux temporels est dédié à la transmission de données en voie remontante, c'est-à-dire depuis le noeud enfant N_{E} ou le terminal mobile MT₁ vers le noeud parent N_{P}. Enfin, un troisième ensemble de créneaux temporels, dit flexible, peut être utilisé pour la transmission de données en voie descendante ou en voie montante en fonction des besoins.

Une fois l'ensemble de ces informations en sa possession, le noeud enfant N_{E} transmet une demande d'attachement MSG1 au noeud parent N_{P} par exemple, au cours d'une étape E2. Lorsque le noeud enfant N_{E} utilise la procédure RACH pour s'attacher au noeud parent N_{P}, la demande d'attachement MSG1 est un message de type « préambule ».

Au cours d'une étape E3, le noeud parent N_{P} détermine une première valeur d'un décalage temporel TA en fonction du temps de propagation de la demande d'attachement émise par le noeud enfant N_{E}.

Au cours d'une étape E4, le noeud parent N_{P} émet un deuxième message MSG2 comprenant la valeur du décalage temporel TA à destination du noeud enfant N_{E}.

Dans une étape E5, le noeud enfant N_{E} utilise la première valeur du décalage temporel TA reçu à deux fins. Premièrement, le noeud enfant N_{E} utilise de manière connue la première valeur du décalage temporel TA reçue afin d'anticiper l'émission de communications en voie remontante et ainsi compenser le temps de propagation. Deuxièmement, le noeud enfant N_{E} utilise la première valeur du décalage temporel TA afin de synchroniser son horloge interne avec le noeud parent N_{P}. Cette première valeur du décalage temporel TA n'est généralement pas déterminée de manière précise car seul le temps de propagation de la demande d'attachement est pris en compte pour la détermination de la première valeur du décalage temporel TA.

Au cours d'une étape E6, le noeud parent N_{P} et le noeud enfant N_{E} finalisent la procédure d'attachement. A l'issue de l'étape E6, le noeud parent N_{P} est la station de base du noeud enfant N_{E}.

Dans une étape E7, le noeud enfant N_{E} émet un troisième message MSG3 à destination du noeud parent N_{P}. Un tel message MSG2 est un message de signalisation tel qu'un message DMRS (pour *Demodulation Reference Signal)* ou SRS (pour *Sounding Reference Signal).*

Dans une étape E8, le noeud parent N_{P} détermine une nouvelle valeur du décalage temporel TA_{N} en fonction du temps de propagation de du troisième message émis par le noeud enfant N_{E}. Afin d'affiner la détermination de la nouvelle valeur du décalage temporel TA_{N}, le noeud parent N_{P} peut également filtrer le bruit et/ou les interférences des signaux reçus depuis le noeud enfant N_{E}.

Au cours d'une étape E9, le noeud parent N_{P} émet, à destination du noeud enfant N_{E}, un message MSG4 comprenant la nouvelle valeur du décalage temporel TA_{N}. Le noeud enfant N_{E} utilise la nouvelle valeur du décalage temporel TA_{N} afin d'ajuster les horaires d'émission des communications en voie remontante et afin d'ajuster la synchronisation de son horloge interne avec le noeud parent N_{P}.

Au cours d'une étape E10, le noeud parent N_{P} vérifie la conformité de la nouvelle valeur du décalage temporel TA_{N} avec un critère de précision CP. Un tel critère de précision peut prendre plusieurs formes selon les modes de réalisation de l'invention.

Ainsi, dans un premier mode de réalisation le critère de précision CP est un seuil avec lequel la nouvelle valeur du décalage temporel TA_{N} est comparée. La nouvelle valeur du décalage temporel TA_{N} est conforme au critère de précision CP si elle est inférieure au seuil.

Dans un deuxième mode de réalisation, le critère de précision CP est vérifié lorsque une différence entre la nouvelle valeur du décalage temporel TA_{N} et une autre valeur du décalage temporel TA_{A} déterminée précédemment est inférieure à seuil.

Dans un troisième mode de réalisation, le critère de précision CP est vérifié lorsque au moins deux valeurs du décalage temporel TA déterminées consécutivement sont déterminées avec une marge d'erreur inférieure à un seuil.

Lorsque la nouvelle valeur du décalage temporel est conforme avec le critère de précision CP, le noeud N_{P} émet, au cours d'une étape E10, un message MSG5 comprenant d'une commande d'activation de la fonction « station de base » à destination du noeud enfant N_{E}.

Dans une étape E12, le noeud enfant N_{E} active la fonction « station de base » et est apte à devenir lui-même un noeud parent d'un noeud petit-enfant N_{PE}.

Les étapes E7 à E9 sont exécutées de manière plus ou moins régulières et aussi longtemps qu'une connexion est établie entre le noeud parent N_{P} et le noeud enfant N_{E}.

Si au cours d'une étape E13 exécutée après l'étape E12, le noeud parent N_{P} vérifie la conformité d'une nouvelle valeur du décalage temporel TA avec un critère de précision CP et que cette nouvelle valeur du décalage temporel n'est pas conforme avec le critère de précision CP, le noeud N_{P} émet, au cours d'une étape E14, un message MSG6 comprenant d'une commande de désactivation de la fonction « station de base » à destination du noeud enfant N_{E}. Le noeud parent N_{P} informe son propre noeud parent, ou s'il n'en n'a pas, un équipement du réseau coeur CORE de la situation du noeud enfant N_{E}.

Le noeud enfant N_{E} désactive la fonction « station de base » au cours d'une étape E15.

Le noeud enfant N_{E} émet ensuite, dans une étape E16 un message MSG7 a destination du noeud petit-enfant N_{PE} l'informant qu'il n'agit plus en tant que station de base. Si le noeud petit-enfant N_{PE} agit lui-même en tant que station de base pour d'autres noeuds de l'architecture, il émet des messages à destination de ces noeuds afin de les informer.

Si au cours d'une étape E17 exécutée après l'étape E16, le noeud parent N_{P} vérifie la conformité d'une nouvelle valeur du décalage temporel TA avec un critère de précision CP et que cette nouvelle valeur du décalage temporel est de nouveau conforme avec le critère de précision CP, le noeud N_{P} émet un message MSG8 comprenant d'une nouvelle commande d'activation de la fonction « station de base » à destination du noeud enfant N_{E}. Le noeud parent N_{P} informe son propre noeud parent, ou s'il n'en n'a pas, un équipement du réseau coeur CORE de la nouvelle situation du noeud enfant N_{E}.

Le noeud enfant N_{E} réactive la fonction « station de base » au cours d'une étape E18 et émet ensuite un message MSG9 a destination du noeud petit-enfant N_{PE} l'informant qu'il agit ne nouveau en tant que station de base.

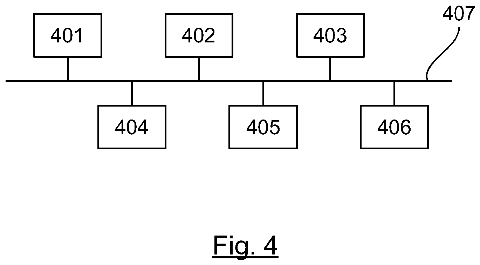

La **figure 4** représente un noeud IAB selon un mode de réalisation de l'invention. Un tel noeud IAB est apte à mettre en oeuvre toutes les étapes du procédé décrit en référence à la figure 3 selon qu'il est un noeud parent ou un noeud enfant.

Un noeud IAB peut comprendre au moins un processeur matériel 401, une unité de stockage 402, un dispositif de saisie 403, un dispositif d'affichage 404, une interface 405, et au moins une interface de réseau 406 qui sont connectés entre eux au travers d'un bus 407. Bien entendu, les éléments constitutifs du noeud IAB peuvent être connectés au moyen d'une connexion autre qu'un bus.

Le processeur 401 commande les opérations du noeud IAB. L'unité de stockage 402 stocke au moins un programme pour la mise en oeuvre d'un procédé d'activation et d'un procédé de communication selon un mode de réalisation de l'invention à exécuter par le processeur 401, et diverses données, telles que des paramètres utilisés pour des calculs effectués par le processeur 401, des données intermédiaires de calculs effectués par le processeur 401, etc. Le processeur 401 peut être formé par tout matériel ou logiciel connu et approprié, ou par une combinaison de matériel et de logiciel. Par exemple, le processeur 401 peut être formé par un matériel dédié tel qu'un circuit de traitement, ou par une unité de traitement programmable telle qu'une unité centrale de traitement *(Central Processing Unit)* qui exécute un programme stocké dans une mémoire de celui-ci.

L'unité de stockage 402 peut être formée par n'importe quel moyen approprié capable de stocker le programme ou les programmes et des données d'une manière lisible par un ordinateur. Des exemples d'unité de stockage 402 comprennent des supports de stockage non transitoires lisibles par ordinateur tels que des dispositifs de mémoire à semi-conducteurs, et des supports d'enregistrement magnétiques, optiques ou magnéto-optiques chargés dans une unité de lecture et d'écriture.

Le dispositif de saisie 403 peut être formé par un clavier, un dispositif de pointage tel qu'une souris à utiliser par un utilisateur pour entrer des commandes. Le dispositif d'affichage 404 peut être également formé par un module d'affichage, tel que par exemple une interface graphique utilisateur ou GUI (pour *Graphical User Interface).*

L'interface 405 fournit une interface entre du noeud IAB et un appareil externe tel qu'un terminal mobile MT1. L'interface 405 peut communiquer avec l'appareil externe via une connexion sans fil.

Au moins une interface réseau 406 fournit une connexion entre le noeud IAB et un autre noeud IAB via une connexion radio. L'interface réseau 406 peut fournir le cas échéant une connexion filaire avec le réseau coeur CORE.

## Revendications

1. Procédé d'activation d'au moins une fonction dans un premier équipement de communication appartenant à un réseau de communication, le procédé comprenant les étapes suivantes exécutées par un deuxième équipement de communication appartenant également au réseau de communication :
- détermination, en fonction d'au moins un temps de propagation d'au moins un premier message émis par le premier équipement de communication à destination du deuxième équipement de communication, d'au moins une première valeur d'un décalage temporel destinée à être utilisée pour synchroniser le premier et le deuxième équipement de communication,
- vérification de la conformité de ladite première valeur du décalage temporel avec un critère de précision,
- lorsque ladite première valeur du décalage temporel est conforme avec le critère de précision, émission à destination du premier équipement de communication d'une commande d'activation de ladite fonction.

2. Procédé d'activation selon la revendication 1 , la fonction ayant été activée dans le premier équipement, et le procédé comprenant les étapes suivantes :
- détermination, en fonction d'au moins un temps de propagation d'au moins un deuxième message émis par le premier équipement de communication à destination du deuxième équipement de communication, d'au moins une deuxième valeur du décalage temporel,
- lorsque ladite au moins une deuxième valeur du décalage temporel n'est pas conforme avec le critère de précision, émission à destination du premier équipement de communication d'une commande de désactivation de ladite fonction.

3. Procédé d'activation selon les revendications 1 ou 2 comprenant, lorsque une valeur du décalage temporel n'est pas conforme avec le critère de précision, une étape de détermination, en fonction d'au moins un temps de propagation d'au moins un troisième message émis par le premier équipement de communication à destination du deuxième équipement de communication, d'au moins une troisième valeur du décalage temporel, ladite étape de détermination étant exécutée jusqu'à ce que ladite au moins une troisième valeur du décalage temporel soit conforme avec le critère de précision.

4. Procédé d'activation selon la revendication 1 dans lequel une valeur du décalage temporel est conforme au critère de précision lorsque une différence entre ladite valeur du décalage temporel et une valeur du décalage temporel précédente est inférieure à un premier seuil.

5. Procédé d'activation selon la revendication 1 dans lequel une valeur du décalage temporel est conforme au critère de précision lorsque au moins deux valeurs du décalage temporel consécutives sont déterminées avec une marge d'erreur inférieure à un deuxième seuil.

6. Procédé de communication entre un premier équipement et un deuxième équipement appartenant tous les deux à un réseau de communication, le procédé de communication étant exécuté par le premier équipement et comprenant les étapes suivantes :
- émission d'au moins un premier message à destination du deuxième équipement de communication,
- réception d'au moins une première valeur d'un décalage temporel destinée à être utilisée pour synchroniser le premier et le deuxième équipement de communication, ladite au moins une première valeur du décalage temporel étant déterminée en fonction d'au moins un temps de propagation dudit au moins un premier message,
- réception d'une commande d'activation d'une fonction dans le premier équipement de communication émise par le deuxième équipement de communication lorsque ladite première valeur du décalage temporel est conforme avec un critère de précision.

7. Procédé de communication selon la revendication 6 , la fonction ayant été activée dans le premier équipement, et le procédé comprenant les étapes suivantes :
- émission d'au moins un deuxième message à destination du deuxième équipement de communication
- réception d'au moins une deuxième valeur du décalage temporel, ladite au moins une deuxième valeur du décalage temporel étant déterminée en fonction d'au moins un temps de propagation dudit au moins un deuxième message,
- lorsque ladite au moins une deuxième valeur du décalage temporel n'est pas conforme avec le critère de précision, réception d'une commande de désactivation de ladite fonction.

8. Procédé de communication selon les revendications 6 ou 7 comprenant, lorsque une valeur du décalage temporel n'est pas conforme avec le critère de précision, une étape de réception d'au moins une troisième valeur du décalage temporel déterminée en fonction d'au moins un temps de propagation d'au moins un troisième message émis à destination du deuxième équipement de communication, ladite étape de réception étant exécutée jusqu'à ce que ladite au moins une troisième valeur du décalage temporel soit conforme avec le critère de précision.

9. Procédé de communication selon la revendication 6 dans lequel le premier message comprend une demande d'attachement du premier équipement.

10. Procédé de communication selon les revendications 6 à 8 dans lequel les messages émis par le premier équipement de communication sont des messages de signalisation.

11. Procédé de communication selon la revendication 7 dans lequel un horaire d'émission du au moins un deuxième message est ajusté en fonction de la première valeur du décalage temporel.

12. Equipement de communication, appartenant à un réseau de communication, capable d'activer d'au moins une fonction dans un autre équipement de communication appartenant audit réseau de communication, l'équipement de communication comprenant des moyens pour :
- déterminer, en fonction d'au moins un temps de propagation d'au moins un premier message émis par l'autre équipement de communication, d'au moins une première valeur d'un décalage temporel destinée à être utilisée pour synchroniser l'autre équipement de communication avec ledit équipement de communication,
- vérifier la conformité de ladite première valeur du décalage temporel avec un critère de précision,
- lorsque ladite première valeur du décalage temporel est conforme avec le critère de précision, émettre à destination de l'autre équipement de communication une commande d'activation de ladite fonction.

13. Equipement de communication, appartenant à un réseau de communication, apte à communiquer avec un autre équipement de communication appartenant également au réseau de communication, l'équipement de communication comprenant des moyens pour :
- émettre au moins un premier message à destination de l'autre équipement de communication,
- recevoir au moins une première valeur d'un décalage temporel destinée à être utilisée pour synchroniser l'équipement de communication avec l'autre équipement de communication, ladite au moins une première valeur du décalage temporel étant déterminée en fonction d'au moins un temps de propagation dudit au moins un premier message,
- recevoir une commande d'activation d'une fonction émise par l'autre équipement de communication lorsque ladite première valeur du décalage temporel est conforme avec un critère de précision.

14. Produit programme d'ordinateur comprenant des instructions de code de programme pour la mise en oeuvre d'un procédé selon l'une quelconque des revendications 1 à 5, lorsqu'il est exécuté par un processeur.

15. Produit programme d'ordinateur comprenant des instructions de code de programme pour la mise en oeuvre d'un procédé selon l'une quelconque des revendications 6 à 11, lorsqu'il est exécuté par un processeur.

## Patentansprüche

1. Verfahren zur Aktivierung mindestens einer Funktion in einer ersten Kommunikationsausrüstung, die zu einem Kommunikationsnetz gehört, wobei das Verfahren die folgenden Schritte enthält, die von einer zweiten Kommunikationsausrüstung ausgeführt werden, die ebenfalls zum Kommunikationsnetz gehört:
- Bestimmung, abhängig von mindestens einer Übertragungszeit mindestens einer ersten Nachricht, die von der ersten Kommunikationsausrüstung an die zweite Kommunikationsausrüstung gesendet wird, mindestens eines ersten Werts einer Zeitverschiebung, der dazu bestimmt ist, zur Synchronisierung der ersten und der zweiten Kommunikationsausrüstung verwendet zu werden,
- Überprüfung der Übereinstimmung des ersten Werts der Zeitverschiebung mit einem Präzisionskriterium,
- wenn der erste Wert der Zeitverschiebung mit dem Präzisionskriterium übereinstimmt, Senden eines Aktivierungsbefehls der Funktion an die erste Kommunikationsausrüstung.

2. Aktivierungsverfahren nach Anspruch 1, wobei die Funktion in der ersten Ausrüstung aktiviert wurde, und das Verfahren die folgenden Schritte enthält:
- Bestimmung, abhängig von mindestens einer Übertragungszeit mindestens einer zweiten Nachricht, die von der ersten Kommunikationsausrüstung an die zweite Kommunikationsausrüstung gesendet wird, mindestens eines zweiten Werts der Zeitverschiebung,
- wenn der mindestens eine zweite Wert der Zeitverschiebung nicht mit dem Präzisionskriterium übereinstimmt, Senden eines Deaktivierungsbefehls der Funktion an die erste Kommunikationsausrüstung.

3. Aktivierungsverfahren nach den Ansprüchen 1 oder 2, das, wenn ein Wert der Zeitverschiebung nicht mit dem Präzisionskriterium übereinstimmt, einen Bestimmungsschritt, abhängig von mindestens einer Übertragungszeit mindestens einer dritten Nachricht, die von der ersten Kommunikationsausrüstung an die zweite Kommunikationsausrüstung gesendet wird, mindestens eines dritten Werts der Zeitverschiebung enthält, wobei der Bestimmungsschritt ausgeführt wird, bis der mindestens eine dritte Wert der Zeitverschiebung mit dem Präzisionskriterium übereinstimmt.

4. Aktivierungsverfahren nach Anspruch 1, wobei ein Wert der Zeitverschiebung mit dem Präzisionskriterium übereinstimmt, wenn eine Differenz zwischen dem Wert der Zeitverschiebung und einem vorhergehenden Wert der Zeitverschiebung niedriger ist als eine erste Schwelle.

5. Aktivierungsverfahren nach Anspruch 1, wobei ein Wert der Zeitverschiebung mit dem Präzisionskriterium übereinstimmt, wenn mindestens zwei aufeinanderfolgende Werte der Zeitverschiebung mit einem Fehlerspielraum geringer als eine zweite Schwelle bestimmt werden.

6. Kommunikationsverfahren zwischen einer ersten Ausrüstung und einer zweiten Ausrüstung, die beide zu einem Kommunikationsnetz gehören, wobei das Kommunikationsverfahren von der ersten Ausrüstung ausgeführt wird und die folgenden Schritte enthält:
- Senden mindestens einer ersten Nachricht an die zweite Kommunikationsausrüstung,
- Empfang mindestens eines ersten Werts einer Zeitverschiebung, der dazu bestimmt ist, zur Synchronisierung der ersten und der zweiten Kommunikationsausrüstung verwendet zu werden, wobei der mindestens eine erste Wert der Zeitverschiebung abhängig von mindestens einer Übertragungszeit der mindestens einen ersten Nachricht bestimmt wird,
- Empfang eines Aktivierungsbefehls einer Funktion in der ersten Kommunikationsausrüstung, der von der zweiten Kommunikationsausrüstung gesendet wird, wenn der erste Wert der Zeitverschiebung mit einem Präzisionskriterium übereinstimmt.

7. Kommunikationsverfahren nach Anspruch 6, wobei die Funktion in der ersten Ausrüstung aktiviert wurde, und das Verfahren die folgenden Schritte enthält:
- Senden mindestens einer zweiten Nachricht an die zweite Kommunikationsausrüstung,
- Empfang mindestens eines zweiten Werts der Zeitverschiebung, wobei der mindestens eine zweite Wert der Zeitverschiebung abhängig von mindestens einer Übertragungszeit der mindestens einen zweiten Nachricht bestimmt wird,
- wenn der mindestens eine zweite Wert der Zeitverschiebung nicht mit dem Präzisionskriterium übereinstimmt, Empfang eines Deaktivierungsbefehls der Funktion.

8. Kommunikationsverfahren nach den Ansprüchen 6 oder 7, das, wenn ein Wert der Zeitverschiebung nicht mit dem Präzisionskriterium übereinstimmt, einen Schritt des Empfangs mindestens eines dritten Werts der Zeitverschiebung enthält, der abhängig von mindestens einer Übertragungszeit mindestens einer dritten Nachricht bestimmt wird, die an die zweite Kommunikationsausrüstung gesendet wird, wobei der Empfangsschritt ausgeführt wird, bis der mindestens eine dritte Wert der Zeitverschiebung mit dem Präzisionskriterium übereinstimmt.

9. Kommunikationsverfahren nach Anspruch 6, wobei die erste Nachricht eine Anbindungsanforderung der ersten Ausrüstung enthält.

10. Kommunikationsverfahren nach den Ansprüchen 6 bis 8, wobei die von der ersten Kommunikationsausrüstung gesendeten Nachrichten Signalisierungsnachrichten sind.

11. Kommunikationsverfahren nach Anspruch 7, wobei ein Sendezeitplan der mindestens einen zweiten Nachricht abhängig vom ersten Wert der Zeitverschiebung eingestellt wird.

12. Kommunikationsausrüstung, die zu einem Kommunikationsnetz gehört, die fähig ist, mindestens eine Funktion in einer anderen Kommunikationsausrüstung zu aktivieren, die zum Kommunikationsnetz gehört, wobei die Kommunikationsausrüstung Einrichtungen enthält, um:
- abhängig von mindestens einer Übertragungszeit mindestens einer von der anderen Kommunikationsausrüstung gesendeten ersten Nachricht mindestens einen ersten Wert einer Zeitverschiebung zu bestimmen, der dazu bestimmt ist, zur Synchronisierung der anderen Kommunikationsausrüstung mit der Kommunikationsausrüstung verwendet zu werden,
- die Übereinstimmung des ersten Werts der Zeitverschiebung mit einem Präzisionskriterium zu überprüfen,
- wenn der erste Wert der Zeitverschiebung mit dem Präzisionskriterium übereinstimmt, an die andere Kommunikationsausrüstung einen Aktivierungsbefehl der Funktion zu senden.

13. Kommunikationsausrüstung, die zu einem Kommunikationsnetz gehört, die geeignet ist, mit einer anderen Kommunikationsausrüstung zu kommunizieren, die ebenfalls zum Kommunikationsnetz gehört, wobei die Kommunikationsausrüstung Einrichtungen enthält, um:
- mindestens eine erste Nachricht an die andere Kommunikationsausrüstung zu senden,
- mindestens einen ersten Wert einer Zeitverschiebung zu empfangen, der dazu bestimmt ist, zur Synchronisierung der Kommunikationsausrüstung mit der anderen Kommunikationsausrüstung verwendet zu werden, wobei der mindestens eine erste Wert der Zeitverschiebung abhängig von mindestens einer Übertragungszeit der mindestens einen ersten Nachricht bestimmt wird,
- einen von der anderen Kommunikationsausrüstung gesendeten Aktivierungsbefehl einer Funktion zu empfangen, wenn der erste Wert der Zeitverschiebung mit einem Präzisionskriterium übereinstimmt.

14. Computerprogrammprodukt, das Programmcodeanweisungen für die Durchführung eines Verfahrens nach einem der Ansprüche 1 bis 5 enthält, wenn es von einem Prozessor ausgeführt wird.

15. Computerprogrammprodukt, das Programmcodeanweisungen für die Durchführung eines Verfahrens nach einem der Ansprüche 6 bis 11 enthält, wenn es von einem Prozessor ausgeführt wird.

## Claims

1. Method for activating at least one function in a first communication equipment belonging to a communication network, the method comprising the following steps, which are executed by a second communication equipment also belonging to the communication network:
- determining, according to at least one propagation time of at least one first message transmitted by the first communication equipment to the second communication equipment, at least one first value of a time lag, which value is intended to be used to synchronize the first and the second communication equipment,
- checking whether said first value of the time lag satisfies an accuracy criterion,
- when said first value of the time lag satisfies the accuracy criterion, transmitting, to the first communication equipment, a command to activate said function.

2. Activation method according to Claim 1, the function having been activated in the first equipment, and the method comprising the following steps:
- determining, according to at least one propagation time of at least one second message transmitted by the first communication equipment to the second communication equipment, at least one second value of the time lag,
- when said at least one second value of the time lag does not satisfy the accuracy criterion, transmitting, to the first communication equipment, a command to deactivate said function.

3. Activation method according to Claim 1 or 2, comprising, when a value of the time lag does not satisfy the accuracy criterion, a step of determining, according to at least one propagation time of at least one third message transmitted by the first communication equipment to the second communication equipment, at least one third value of the time lag, said determining step being executed until said at least one third value of the time lag satisfies the accuracy criterion.

4. Activation method according to Claim 1, wherein a value of the time lag satisfies the accuracy criterion when a difference between said value of the time lag and a preceding value of the time lag is below a first threshold.

5. Activation method according to Claim 1, wherein a value of the time lag satisfies the accuracy criterion when at least two consecutive values of the time lag are determined with a margin of error which is below a second threshold.

6. Method for communication between a first equipment and a second equipment both belonging to a communication network, the communication method being executed by the first equipment and comprising the following steps:
- transmitting at least one first message to the second communication equipment,
- receiving at least one first value of a time lag, which value is intended to be used to synchronize the first and the second communication equipment, said at least one first value of the time lag being determined according to at least one propagation time of said at least one first message,
- receiving a command to activate a function in the first communication equipment, which command is transmitted by the second communication equipment when said first value of the time lag satisfies an accuracy criterion.

7. Communication method according to Claim 6, the function having been activated in the first equipment, and the method comprising the following steps:
- transmitting at least one second message to the second communication equipment,
- receiving at least one second value of the time lag, said at least one second value of the time lag being determined according to at least one propagation time of said at least one second message,
- when said at least one second value of the time lag does not satisfy the accuracy criterion, receiving a command to deactivate said function.

8. Communication method according to Claim 6 or 7, comprising, when a value of the time lag does not satisfy the accuracy criterion, a step of receiving at least one third value of the time lag, which value is determined according to at least one propagation time of at least one third message transmitted to the second communication equipment, said receiving step being executed until said at least one third value of the time lag satisfies the accuracy criterion.

9. Communication method according to Claim 6, wherein the first message comprises an attachment request from the first equipment.

10. Communication method according to Claims 6 to 8, wherein the messages transmitted by the first communication equipment are signalling messages.

11. Communication method according to Claim 7, wherein a transmission time for the at least one second message is adjusted according to the first value of the time lag.

12. Communication equipment, belonging to a communication network, which is capable of activating at least one function in another communication equipment belonging to said communication network, the communication equipment comprising means for:
- determining, according to at least one propagation time of at least one first message transmitted by the other communication equipment, at least one first value of a time lag, which value is intended to be used to synchronize the other communication equipment with said communication equipment,
- checking whether said first value of the time lag satisfies an accuracy criterion,
- when said first value of the time lag satisfies the accuracy criterion, transmitting, to the other communication equipment, a command to activate said function.

13. Communication equipment, belonging to a communication network, which is able to communicate with another communication equipment also belonging to the communication network, the communication equipment comprising means for:
- transmitting at least one first message to the other communication equipment,
- receiving at least one first value of a time lag, which value is intended to be used to synchronize the communication equipment with the other communication equipment, said at least one first value of the time lag being determined according to at least one propagation time of said at least one first message,
- receiving a command to activate a function transmitted by the other communication equipment when said first value of the time lag satisfies an accuracy criterion.

14. Computer program product, comprising program code instructions for implementing a method according to any one of Claims 1 to 5, when it is executed by a processor.

15. Computer program product, comprising program code instructions for implementing a method according to any one of Claims 6 to 11, when it is executed by a processor.
